# EUROPEAN PATENT APPLICATION

(11) **EP 4 787 998 A1**
(43) Date of publication of application: **05.08.2026**
(21) Application number: 24870839.8
(22) Date of filing: 26.09.2024
(51) Int. Cl.: H04W 72/0446, H04W 64/00

(54) **METHOD USED IN COMMUNICATION NODE FOR WIRELESS COMMUNICATION, AND APPARATUS**

(30) Priority: 27.09.2023 CN 202311272643
(71) Applicant: Apogee 5G Global, LLC, Plano, TX 75024 (US)
(72) Inventor: YU, Qiaoling, Shanghai 201206 (CN); REN, Nannan, Shanghai 201206 (CN); ZHANG, Xiaobo, Shanghai 201206 (CN)
(74) Representative: Gunzelmann, Rainer
(86) International application number: PCT/CN2024/121300
(87) International publication number: WO 2025/067295

(57) **Abstract**

Disclosed in the present application are a method used in a communication node for wireless communication, and an apparatus. A communication node transmits a first signal; a second signal is received; and a first timing advance value is determined; the first signal triggers the second signal, the second signal is an echo signal of the first signal, the determination of the first timing advance value depends on a first duration, and the first duration depends on the duration between the moment of sending the first signal and the moment of receiving the second signal. The solution provided by the present application facilitates the merger of communication and sensing networks, signaling interaction during a TA acquisition process is reduced, time delay during the TA acquisition process is reduced, and TA estimation accuracy is improved.

## Description

### Technical Field

The present application relates to a transmission method and apparatus in a wireless communication system, and in particular to a method and an apparatus for TA acquisition.

### Background Art

With the continuous growth of sensing demands, the trend toward the merger of sensing and communication capabilities in networks has become increasingly evident. In June 2023, the ITU-R WP 5D working group unanimously adopted the draft recommendation for IMT-2030 (6G) at its 44th meeting, in which Integrated Sensing and Communication (ISAC) was comprised as a new application scenario among the six major application scenarios of 6G for the first time. In November 2022, 3GPP (the 3rd Generation Partnership Project) released the technical report 22.837 (Rel-19) on "Feasibility Study on Integrated Sensing and Communication", which elaborated 26 different use cases and consolidated the potential requirements and key performance indicators (KPIs) of ISAC. In July 2023, 3GPP released the "Technical Specification on Integrated Sensing and Communication". 3GPP RAN is also about to conduct channel modeling and other work on ISAC.

With the continuous development of wireless communication, demands have become increasingly diversified. Therefore, in the future evolution, 3GPP will further enhance some key technologies, for example, applying AI (Artificial Intelligence) or ML (Machine Learning) to TA acquisition to improve the accuracy of TA acquisition and reduce signaling overhead.

Existing TA acquisition does not take into account the ISAC capability of UE that may be introduced and does not implement active TA acquisition by the UE, which may result in cumbersome signaling interaction and a high probability of uplink out-of-synchronization in TA acquisition based on a random access procedure.

### Summary of the Invention

The inventor has found that in an existing TA acquisition process, UE acquires a TA through a random access procedure: the UE sends a preamble signal, and after receiving the preamble signal, a base station determines an uplink TA according to a moment of receiving a preamble and a moment of sending the preamble, and feeds the uplink TA back to the UE through a timing advance command. In this process, signaling interaction delay on a network side and a change in a channel environment caused by UE movement will affect the validity of the TA, causing the UE to trigger uplink out-of-synchronization and the random access procedure, thereby affecting the continuity of bearer services. Therefore, it is necessary to further study methods for rapidly acquiring the TA, especially but without limitation, how to use ISAC to assist TA acquisition when the ISAC is used in existing systems needs to be studied.

In view of the above problems, the present application provides a solution. In the description of the above problems, an NR system is used as one example. The present application is also applicable to scenarios such as an LTE (Long-Term Evolution) system or an LTE-A (Long-Term Evolution Advanced) system to achieve technical effects similar to those of the NR system; and further, although the present application provides a specific implementation for a 3GPP system, the present application can also be used in scenarios of non-3GPP systems to achieve technical effects similar to those of the 3GPP system. Further, the use of a unified solution for different scenarios also helps to reduce hardware complexity and cost. Further, although the original intention of the present application is for a Uu air interface, the present application can also be used for a PC5 interface to achieve technical effects similar to those of the Uu air interface. Further, although the original intention of the present application is for a terminal and base station scenario, the present application is also applicable to a V2X (Vehicle-to-Everything) scenario, and communication scenarios between the terminal and a relay and between the relay and a base station to achieve technical effects similar to those in the terminal and base station scenario. Further, although the original intention of the present application is for a terminal and base station scenario, the present application is also applicable to a communication scenario of an IAB (Integrated Access and Backhaul) to achieve technical effects similar to those in the terminal and base station scenario. Further, although the original intention of the present application is for a terrestrial network (TN) scenario, the present application is also applicable to a communication scenario of a non-terrestrial network (NTN) to achieve technical effects similar to those in the TN scenario. In addition, the use of a unified solution for different scenarios also helps to reduce hardware complexity and cost.

As one embodiment, interpretations of terminologies in the present application refer to definitions in the specification protocol TS36 series of 3GPP.

As one embodiment, the interpretations of the terminologies in the present application refer to the definitions in the specification protocol TS38 series of 3GPP.

As one embodiment, the interpretations of the terminologies in the present application refer to the definitions in the specification protocol TS37 series of 3GPP.

It should be noted that in the absence of conflicts, embodiments and features in the embodiments in any node of the present application may be applied to any other node. In the absence of conflicts, the embodiments and the features in the embodiments of the present application may be arbitrarily combined with each other.

The present application discloses a method used in a first node for wireless communication, characterized by comprising:
sending a first signal; receiving a second signal; and determining a first timing advance,
wherein the first signal triggers the second signal; the second signal is an echo signal of the first signal; determination of the first timing advance depends on a first duration; and the first duration depends on a duration between a moment of sending the first signal and a moment of receiving the second signal.

As one embodiment, problems to be solved by the present application comprise: how to enable UE to acquire a TA more efficiently.

As one embodiment, the problems to be solved by the present application comprise: if an ISAC function is introduced in NR, how to use the ISAC function to assist TA acquisition.

As one embodiment, characteristics of the above method comprise: the second signal is the echo signal of the first signal.

As one embodiment, the characteristics of the above method comprise: the determination of the first timing advance depends on the first duration; and the first duration depends on the duration between the moment of sending the first signal and the moment of receiving the second signal.

As one embodiment, benefits of the above method comprise: reducing signaling interaction.

As one embodiment, the benefits of the above method comprise: being conducive to improving TA timeliness.

As one embodiment, the benefits of the above method comprise: being conducive to reducing delay in a TA acquisition process.

As one embodiment, the benefits of the above method comprise: being conducive to UE performing TA estimation.

According to one aspect of the present application, it is characterized in that the determination of the first timing advance depends on a second duration; and the second duration depends on a first uplink parameter and a first downlink parameter.

As one embodiment, the benefits of the above method comprise: being conducive to determining an offset caused by uplink and downlink physical layer parameters.

According to one aspect of the present application, it is characterized in that the determination of the first timing advance depends on a third duration, and the third duration depends on a third node; and the third duration is preconfigured or the third duration is default.

As one embodiment, the benefits of the above method comprise: being conducive to determining an offset caused by deployment of RIS.

According to one aspect of the present application, it is characterized by receiving a first RRC message, the first RRC message comprising a fourth duration, wherein the determination of the first timing advance depends on the fourth duration.

As one embodiment, the benefits of the above method comprise: being conducive to determining an offset caused by an RRC preconfiguration.

As one embodiment, the benefits of the above method comprise: being conducive to UE performing TA estimation.

According to one aspect of the present application, it is characterized in that the second signal comprises a plurality of physical signals, and the moment of receiving the second signal depends on moments of receiving the plurality of physical signals.

As one embodiment, the benefits of the above method comprise: being conducive to reducing an impact of a multipath effect on the TA estimation.

According to one aspect of the present application, it is characterized by receiving first signaling, the first signaling comprising one Timing Advance Command field, and the one Timing Advance Command field in the first signaling indicating a second timing advance; and starting or restarting a first timer in response to the first signaling being received.

As one embodiment, the benefits of the above method comprise: simple implementation and less impact on existing protocols.

According to one aspect of the present application, it is characterized by starting or restarting the first timer in response to the second signal being received.

As one embodiment, the benefits of the above method comprise: being conducive to reducing signaling interaction.

The present application discloses a method used in a second node for wireless communication, characterized by comprising:
receiving a first signal; and
sending a second signal,
wherein a sender of the first signal determines a first timing advance; the first signal triggers the second signal; the second signal is an echo signal of the first signal; determination of the first timing advance depends on a first duration; and the first duration depends on a duration between a moment of sending the first signal and a moment of receiving the second signal.

According to one aspect of the present application, it is characterized in that the determination of the first timing advance depends on a second duration; and the second duration depends on a first uplink parameter and a first downlink parameter.

According to one aspect of the present application, it is characterized in that the determination of the first timing advance depends on a third duration, and the third duration depends on a third node; and the third duration is preconfigured or the third duration is default.

According to one aspect of the present application, it is characterized by comprising:
sending a first RRC message, the first RRC message comprising a fourth duration,
wherein the determination of the first timing advance depends on the fourth duration.

According to one aspect of the present application, it is characterized in that the second signal comprises a plurality of physical signals, and the moment of receiving the second signal depends on moments of receiving the plurality of physical signals.

According to one aspect of the present application, it is characterized by comprising:
sending first signaling, the first signaling comprising one Timing Advance Command field, and the one Timing Advance Command field in the first signaling indicating a second timing advance, wherein the sender of the first signal starts or restarts a first timer in response to the first signaling being received,
wherein the behavior of sending the first signal depends on the first timer expiring.

According to one aspect of the present application, it is characterized by comprising:
the sender of the first signal, starting or restarting the first timer in response to the second signal being received.

The present application discloses a first node for wireless communication, characterized by comprising:
a first transmitter, sending a first signal;
a first receiver, receiving a second signal; and determining a first timing advance,
wherein the first signal triggers the second signal; the second signal is an echo signal of the first signal; determination of the first timing advance depends on a first duration; and the first duration depends on a duration between a moment of sending the first signal and a moment of receiving the second signal.

The present application discloses a second node for wireless communication, characterized by comprising:
a second receiver, receiving a first signal; and
a second transmitter, sending a second signal,
wherein a sender of the first signal determines a first timing advance; the first signal triggers the second signal; the second signal is an echo signal of the first signal; determination of the first timing advance depends on a first duration; and the first duration depends on a duration between a moment of sending the first signal and a moment of receiving the second signal.

As one embodiment, compared with traditional solutions, the present application has the following advantages:
- . being conducive to the optimization of the TA acquisition process in combination with the ISAC function;
- . being conducive to the reduction of the signaling interaction in the TA acquisition process;
- . being conducive to the reduction of the delay in the TA acquisition process;
- . being conducive to the UE performing the TA estimation; and
- . being conducive to the realization of network merger.

### Brief Description of the Drawings

Other features, purposes, and advantages of the present application will become more apparent by reading the detailed description of the non-limiting embodiments in the following drawings:
FIG. 1 shows a flowchart of communication according to one embodiment of the present application;
FIG. 2 shows a schematic diagram of a network architecture according to one embodiment of the present application;
FIG. 3 shows a schematic diagram of an embodiment of a wireless protocol architecture of a user plane and a control plane according to one embodiment of the present application;
FIG. 4 shows a schematic diagram of a first communication device and a second communication device according to one embodiment of the present application;
FIG. 5 shows a flowchart of wireless signal transmission according to one embodiment of the present application;
FIG. 6 shows a schematic diagram of an interrelationship among a first timing advance and a second duration as well as a first uplink parameter and a first downlink parameter according to one embodiment of the present application;
FIG. 7 shows a schematic diagram of an interrelationship among a first timing advance and a third duration as well as a third node according to one embodiment of the present application;
FIG. 8 shows a schematic diagram of a relationship between a first RRC message and a first timing advance according to one embodiment of the present application;
FIG. 9 shows a schematic diagram of a relationship between a second signal and a moment of receiving the second signal and a plurality of physical signals according to one embodiment of the present application;
FIG. 10 shows a schematic diagram of determination of a first timing advance depending on a second duration according to one embodiment of the present application;
FIG. 11 shows a structural block diagram of a processing apparatus used in a first node according to one embodiment of the present application;
FIG. 12 shows a structural block diagram of a processing apparatus used in a second node according to one embodiment of the present application;
FIG. 13 shows a schematic diagram of time domain resources occupied by a first signal and a second signal according to one embodiment of the present application;
FIG. 14 shows a schematic diagram of an artificial intelligence processing system according to one embodiment of the present application; and
FIG. 15 shows a schematic diagram of an artificial intelligence processing system according to another embodiment of the present application.

### Detailed Description of Embodiments

The technical solutions of the present application will be further described in detail below in conjunction with the drawings. It should be noted that in the absence of conflicts, embodiments and features in the embodiments of the present application can be arbitrarily combined with each other.

### Embodiment 1

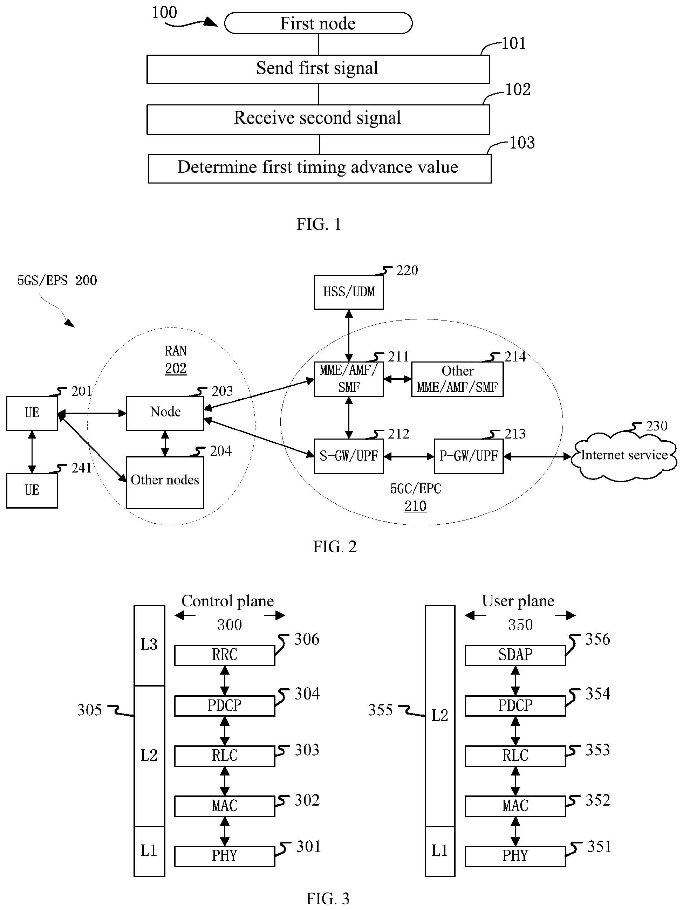

Embodiment 1 illustrates a flowchart of communication according to one embodiment of the present application, as shown in FIG. 1. In FIG. 1, each block represents one step. It is particularly needed to emphasize that an order of various blocks in the figure does not represent a temporal relationship between the steps represented.

In Embodiment 1, a first node in the present application, in step 101, sends a first signal; in step 102, receives a second signal; andin step 103, determines a first timing advance,wherein the first signal triggers the second signal; the second signal is an echo signal of the first signal; determination of the first timing advance depends on a first duration; and the first duration depends on a duration between a moment of sending the first signal and a moment of receiving the second signal.

As one embodiment, the first signal is a physical signal.

As one embodiment, the first signal is a physical layer signal.

As one embodiment, the first signal is a radar signal.

As one embodiment, the first signal is a sensing signal.

As one embodiment, the first signal bears user data.

As one embodiment, the first signal does not bear user data.

As one embodiment, the first signal bears information.

As one embodiment, the first signal does not bear information.

As one embodiment, the first signal is a signal in a sensing-dedicated physical channel.

As one embodiment, the first signal is preconfigured.

As one embodiment, the first signal is periodic.

As one embodiment, the first signal is semi-persistent.

As one embodiment, the first signal is not one preamble signal.

As one embodiment, the first signal is one of a plurality of signals in a first signal set.

As one embodiment, the first signal set is periodic.

As one embodiment, the first signal set is preconfigured.

As one embodiment, the second signal is a physical signal.

As one embodiment, the second signal is one physical signal.

As one embodiment, the second signal comprises a plurality of physical signals.

As one embodiment, the second signal is a physical layer signal.

As one embodiment, the second signal is the echo signal of the first signal.

As one embodiment, a format of the second signal is the same as a format of the first signal.

As one embodiment, a waveform of the second signal is the same as a waveform of the first signal.

As one embodiment, the second signal is sent on a sensing-dedicated physical channel.

As one embodiment, the second signal is a radar reflection signal.

As one embodiment, the second signal is a modulated signal.

As one embodiment, the second signal is an unmodulated signal.

As one embodiment, a physical layer parameter sent by the second signal is predefined.

As one embodiment, the physical layer parameter sent by the second signal is preconfigured.

As one embodiment, the physical layer parameter sent by the second signal is related to the first signal.

As one embodiment, a time-frequency resource occupied by the second signal depends on the first signal.

As one embodiment, the time-frequency resource occupied by the second signal depends on reception of the first signal.

As one embodiment, the time-frequency resource occupied by the second signal depends on an environment in which the first node is located.

As one embodiment, the time-frequency resource occupied by the second signal is indicated by the first signal.

As one embodiment, a time domain resource occupied by the second signal is preconfigured.

As one embodiment, the time domain resource occupied by the second signal depends on the first signal.

As one embodiment, the second signal does not comprise any Timing Advance Command field.

As one embodiment, the second signal does not comprise any field indicating a TA.

As one embodiment, reception of the second signal depends on the first signal.

As one embodiment, detection of the second signal depends on the first signal.

As one embodiment, the second signal comprises all information of the first signal.

As one embodiment, the second signal comprises part of information of the first signal.

As one embodiment, the second signal is the first signal.

As one embodiment, the action of the first signal triggering the second signal means that: the second signal is a signal of the first signal reflected or refracted or scattered by a second node.

As one embodiment, the action of the first signal triggering the second signal means that: the second node sends the second signal when receiving the first signal.

As one embodiment, the action of the first signal triggering the second signal means that: the second node sends the second signal after receiving the first signal.

As one embodiment, the action of the first signal triggering the second signal means that: the second node sends the second signal after receiving the first signal for a period of time.

As one embodiment, the action of the first signal triggering the second signal means that: the second node sends the second signal according to configurations after receiving the first signal.

As one embodiment, the action of the first signal triggering the second signal means that: the second signal is a signal of the first signal reflected or refracted or transmitted by an RIS panel at the second node.

As one embodiment, the second signal being the echo signal of the first signal means that: the second signal is a signal of the first signal reflected or scattered or refracted by the second node.

As one embodiment, the second signal being the echo signal of the first signal means that: the second signal is a signal of the first signal reflected or scattered or refracted or transmitted by the second node or the RIS panel at the second node.

As one embodiment, the second signal being the echo signal of the first signal means that: the second signal is the echo signal generated by the first signal passing through the second node, wherein a second transmitter has no gain for the second signal.

As one embodiment, the first timing advance is an uplink time advance (TA) of the first node.

As one embodiment, the first timing advance is used for at least a first cell.

As one embodiment, the first cell is one serving cell of the first node.

As one embodiment, the first timing advance is used for uplink (UL) time alignment of at least the first cell.

As one embodiment, the first timing advance is used for the uplink time alignment of each cell in at least a first TAG.

As one embodiment, the first timing advance is used for at least the first TAG; and the first TAG comprises at least the first cell.

As one embodiment, the first timing advance is used by a MAC entity for controlling a timing adjustment amount.

As one embodiment, any cell in the first TAG is one serving cell of the first node.

As one embodiment, the serving cell means a PCell.

As one embodiment, the serving cell means a PSCell.

As one embodiment, the serving cell means an SCell.

As one embodiment, that the determination of the first timing advance depends on the first duration means that: calculation of the first timing advance depends on the first duration.

As one embodiment, that the determination of the first timing advance depends on the first duration means that: the first timing advance is related to the first duration.

As one embodiment, that the determination of the first timing advance depends on the first duration means that: the first timing advance is linearly related to the first duration.

As one embodiment, that the determination of the first timing advance depends on the first duration means that: the first timing advance is expressed in a form of a sum of the first duration and certain other items.

As one embodiment, that the determination of the first timing advance depends on the first duration means that: the first duration is the duration between the moment of sending the first signal and the moment of receiving the second signal.

As one embodiment, the moment of sending the first signal is a moment at which the first symbol of the first signal is sent.

As one embodiment, the moment of sending the first signal is a moment at which the last symbol of the first signal is sent.

As one embodiment, the moment of receiving the second signal is a moment of receiving one physical signal in the plurality of physical signals; and the second signal comprises the plurality of physical signals.

As one embodiment, the moment of receiving the second signal is a moment at which the first symbol of the second signal is received.

As one embodiment, the moment of receiving the second signal is a moment at which the last symbol of the second signal is received.

As one embodiment, the moment of receiving the second signal means: a moment at which the first node receives and confirms the second signal.

As one embodiment, the moment of receiving the second signal means: a moment at which the first node receives and correctly decodes the second signal.

As one embodiment, the moment of receiving the second signal means: a moment of receiving a strongest path of the second signal.

As one embodiment, the moment of receiving the second signal means: a moment corresponding to a maximum peak in one or more peaks that a receiving matrix of the first node for the second signal has after domain transformation along a subcarrier sequence or a symbol sequence.

As one embodiment, the determination of the first timing advance depends on sending of the first signal and reception of the second signal; the sending of the first signal comprises the moment of sending the first signal; andthe reception of the second signal comprises the moment of receiving the second signal.

As one embodiment, the determination of the first timing advance depends on only the first duration.

As one embodiment, the determination of the first timing advance depends on only at least the first duration.

As one embodiment, the determination of the first timing advance depends on the first duration and a first time offset.

As one embodiment, the first time offset is used for correcting the first duration.

As one embodiment, the first time offset depends on a measurement of the second signal.

As one embodiment, the first time offset depends on measurement result information of the second signal.

As one sub-embodiment of the above embodiment, the measurement result information of the second signal means RSRP of the second signal.

As one sub-embodiment of the above embodiment, the measurement result information of the second signal means radar sensing information.

As one sub-embodiment of the above embodiment, the measurement result information of the second signal means ISAC sensing information.

As one sub-embodiment of the above embodiment, the measurement result information of the second signal means distance information.

As one sub-embodiment of the above embodiment, the measurement result information of the second signal means speed information.

As one sub-embodiment of the above embodiment, the measurement result information of the second signal means angle information.

As one embodiment, the determination of the first timing advance means determining a value of the first timing advance.

As one embodiment, the determination of the first timing advance means determining an adjustment value of the first timing advance.

As one embodiment, the first duration is equal to the duration between the moment of sending the first signal and the moment of receiving the second signal.

As one embodiment, the first duration is equal to ((floor(the duration between the moment of sending the first signal and the moment of receiving the second signal/a first time unit)) the first time unit).

As one embodiment, the first duration is equal to ((Ceil(the duration between the moment of sending the first signal and the moment of receiving the second signal/the first time unit)) the first time unit).

As one embodiment, the first duration is equal to ((round(the duration between the moment of sending the first signal and the moment of receiving the second signal/the first time unit)) the first time unit).

As one embodiment, the first time unit is one time unit.

As one embodiment, the first time unit is one basic time unit.

As one embodiment, the first time unit is Tc.

As one embodiment, the first time unit is Ts.

As one embodiment, the first time unit is a basic time unit of 6G communication.

As one embodiment, the first node supports ISAC.

As one embodiment, the second node supports ISAC.

As one embodiment, the second node supports RIS.

As one embodiment, when the first node supports the ISAC, the determination of the first timing advance depends on at least one of the first duration and a second duration.

As one embodiment, when at least the first node supports the ISAC, the determination of the first timing advance depends on at least one of the first duration and the second duration.

### Embodiment 2

Embodiment 2 illustrates a packet switching service according to the present application; however, those skilled in the art will readily appreciate that various concepts presented throughout the present application may be extended to networks providing circuit switching services or other cellular networks. An RAN comprises a node 203 and other nodes 204. The node 203 provides user and control plane protocol termination towards UE201. The node 203 may be connected to other nodes 204 via an Xn interface (e.g., backhaul)/X2 interface. The node 203 may also be referred to as a base station, a base transceiver station, a radio base station, a radio transceiving device, a transceiving device function, a basic service set (BSS), an extended service set (ESS), a TRP (transmitter receiver point), or some other suitable terminologies. The node 203 provides an access point to the 5GC/EPC210 for the UE201. Examples of the UE201 comprise a cellular phone, a smart phone, a session initiation protocol (SIP) phone, a laptop, a personal digital assistant (PDA), a satellite radio, non-terrestrial base station communication, satellite mobile communication, a global positioning system, a multimedia apparatus, a video apparatus, a digital audio player (e.g., an MP3 player), a camera, a game console, a drone, an aircraft, a narrowband Internet of Things device, a machine type communication device, a land vehicle, an automobile, a wearable device, or any other similarly functional apparatus. Those skilled in the art may also refer to the UE201 as a mobile station, a subscriber station, a mobile unit, a subscriber unit, a wireless unit, a remote unit, a mobile apparatus, a wireless apparatus, a wireless communication apparatus, a remote apparatus, a mobile subscriber station, an access terminal, a mobile terminal, a wireless terminal, a remote terminal, a handset, a user agent, a mobile client, a client, or some other suitable terminologies. The node 203 is connected to the 5GC/EPC210 via an S1/NG interface. The 5GC/EPC210 comprises an MME (Mobility Management Entity)/AMF (Authentication Management Field)/SMF (Session Management Function) 211, other MME/AMF/SMF214, an S-GW (Service Gateway)/UPF (User Plane Function) 212, and a P-GW (Packet Data Network Gateway)/UPF213. The MME/AMF/SMF211 is a control node that processes signaling between the UE201 and the 5GC/EPC210. Generally, the MME/AMF/SMF211 provides bearer and connection management. All user IP (Internet Protocol) packets are transmitted via the S-GW/UPF212, and the S-GW/UPF212 itself is connected to the P-GW/UPF213. The P-GW provides UE IP address allocation and other functions. The P-GW/UPF213 is connected to an Internet service 230. The Internet service 230 comprises operator-corresponding Internet protocol services, which may specifically comprise the Internet, an intranet, an IMS (IP Multimedia Subsystem), and a packet switching streaming service.

As one embodiment, the UE201 corresponds to a first node in the present application.

As one embodiment, the UE201 is one piece of user equipment (UE).

As one embodiment, the UE201 is one BaseStation device (BS).

As one embodiment, the UE201 is one relay device.

As one embodiment, the UE201 is one gateway device.

As one embodiment, the node 203 corresponds to a second node in the present application.

As one embodiment, the node 203 is one base station device.

As one embodiment, the node 203 is one piece of user equipment.

As one embodiment, the node 203 is one relay device.

As one embodiment, the node 203 is one gateway device.

As one embodiment, the user equipment supports ISAC.

As one embodiment, the user equipment supports radar.

As one embodiment, the user equipment supports a transmission in a non-terrestrial network (NTN).

As one embodiment, the user equipment supports a transmission in a terrestrial network.

As one embodiment, the user equipment supports a dual connection (DC) transmission.

As one embodiment, the user equipment comprises an aircraft.

As one embodiment, the user equipment comprises a vehicle-mounted terminal.

As one embodiment, the user equipment comprises a vessel.

As one embodiment, the user equipment comprises an Internet of Things terminal.

As one embodiment, the user equipment comprises an industrial Internet of Things terminal.

As one embodiment, the user equipment comprises a device supporting a low-latency and high-reliability transmission.

As one embodiment, the user equipment comprises a test device.

As one embodiment, the user equipment comprises a signaling tester.

As one embodiment, the user equipment comprises an IAB (Integrated Access and Backhaul)-MT (Mobile Termination).

As one embodiment, the base station device supports ISAC.

As one embodiment, the base station device supports radar.

As one embodiment, the base station device supports a transmission in a non-terrestrial network.

As one embodiment, the base station device supports a transmission in a terrestrial network.

As one embodiment, the base station device comprises a base transceiver station (BTS).

As one embodiment, the base station device comprises a NodeB (NB).

As one embodiment, the base station device comprises a gNB.

As one embodiment, the base station device comprises an eNB.

As one embodiment, the base station device comprises an ng-eNB.

As one embodiment, the base station device comprises an en-gNB.

As one embodiment, the base station device comprises a CU (Centralized Unit).

As one embodiment, the base station device comprises a DU (Distributed Unit).

As one embodiment, the base station device comprises a TRP (Transmitter Receiver Point).

As one embodiment, the base station device comprises a Macro Cellular base station.

As one embodiment, the base station device comprises a Micro Cell base station.

As one embodiment, the base station device comprises a Pico Cell base station.

As one embodiment, the base station device comprises a Femtocell.

As one embodiment, the base station device comprises a flight platform device.

As one embodiment, the base station device comprises a satellite device.

As one embodiment, the base station device comprises a test device.

As one embodiment, the base station device comprises a signaling tester.

As one embodiment, the base station device comprises a gateway device.

As one embodiment, the base station device comprises an IAB-node.

As one embodiment, the base station device comprises an IAB-donor.

As one embodiment, the base station device comprises an IAB-donor-CU.

As one embodiment, the base station device comprises an IAB-donor-DU.

As one embodiment, the base station device comprises an IAB-DU.

As one embodiment, the base station device comprises an IAB-MT.

As one embodiment, the relay device comprises a relay.

As one embodiment, the relay device comprises an L3 relay.

As one embodiment, the relay device comprises an L2 relay.

As one embodiment, the relay device comprises a router.

As one embodiment, the relay device comprises a switch.

As one embodiment, the relay device comprises a gateway device.

As one embodiment, the relay device comprises user equipment.

As one embodiment, the relay device comprises a base station device.

### Embodiment 3

Embodiment 3 shows a schematic diagram of an embodiment of one wireless protocol architecture for a user plane and a control plane according to the present application, as shown in FIG. 3. FIG. 3 is a schematic diagram illustrating an embodiment of a radio protocol architecture for a user plane 350 and a control plane 300. FIG. 3 shows the radio protocol architecture for the control plane 300 using three layers: a Layer 1, a Layer 2, and a Layer 3. The Layer 1 (L1 layer) is the lowest layer and implements various PHY (physical layer) signal processing functions. The L1 layer will be referred to as a PHY301 herein. A layer 2 (L2 layer) 305 is above the PHY301 and comprises a MAC (Medium Access Control) sublayer 302, an RLC (Radio Link Control) sublayer 303, and a PDCP (Packet Data Convergence Protocol) sublayer 304. The PDCP sublayer 304 provides multiplexing between different radio bearers and logical channels. The PDCP sublayer 304 also provides security by encrypting data packets, and provides handover support. The RLC sublayer 303 provides segmentation and reassembly of upper-layer data packets, retransmission of lost data packets, and reordering of data packets to compensate for out-of-order reception due to an HARQ (Hybrid Automatic Repeat Request). The MAC sublayer 302 provides multiplexing between logical and transport channels. The MAC sublayer 302 is also responsible for allocating various radio resources (e.g., resource blocks) in one cell. The MAC sublayer 302 is also responsible for HARQ operations. An RRC (Radio Resource Control) sublayer 306 in the Layer 3 (L3 layer) in the control plane 300 is responsible for obtaining radio resources (i.e., radio bearers) and configuring lower layers by using RRC signaling. The radio protocol architecture for the user plane 350 comprises the Layer 1 (L1 layer) and the Layer 2 (L2 layer). The radio protocol architecture in the user plane 350 is substantially the same as that for the corresponding layers and sublayers in the control plane 300 for a physical layer 351, a PDCP sublayer 354 in an L2 layer 355, an RLC sublayer 353 in the L2 layer 355, and a MAC sublayer 352 in the L2 layer 355, but the PDCP sublayer 354 also provides header compression for upper-layer data packets to reduce radio transmission overhead. The L2 layer 355 in the user plane 350 also comprises an SDAP (Service Data Adaptation Protocol) sublayer 356, and the SDAP sublayer 356 is responsible for mapping between a QoS stream and a data radio bearer (DRB) to support the diversity of services.

As one embodiment, the wireless protocol architecture in FIG. 3 is applicable to a first node in the present application.

As one embodiment, the wireless protocol architecture in FIG. 3 is applicable to a second node in the present application.

As one embodiment, a first signal in the present application is generated in a MAC302 or a MAC352.

As one embodiment, the first signal in the present application is generated in the PHY301 or a PHY351.

As one embodiment, a second signal in the present application is generated in the MAC302 or the MAC352.

As one embodiment, the second signal in the present application is generated in the PHY301 or the PHY351.

As one embodiment, a first RRC message in the present application is generated in an RRC306.

As one embodiment, first signaling in the present application is generated in the RRC306.

As one embodiment, the first signaling in the present application is generated in the MAC302 or MAC352.

### Embodiment 4

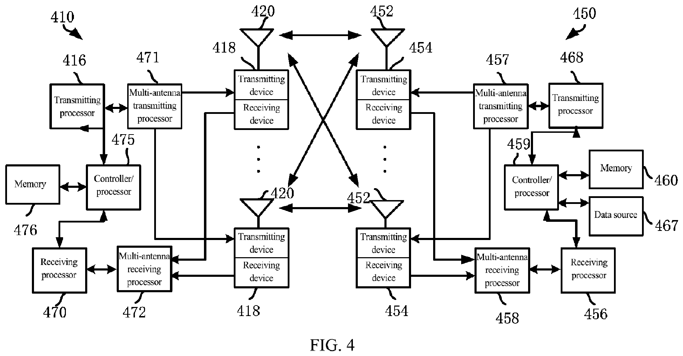

Embodiment 4 shows a schematic diagram of a first communication device and a second communication device according to the present application, as shown in FIG. 4. FIG. 4 is a block diagram of a first communication device 450 and a second communication device 410 communicating with each other in an access network.

The first communication device 450 comprises a controller/processor 459, a memory 460, a data source 467, a transmitting processor 468, a receiving processor 456, a multi-antenna transmitting processor 457, a multi-antenna receiving processor 458, a transmitting device/receiving device 454, and an antenna 452.

The second communication device 410 comprises a controller/processor 475, a memory 476, a receiving processor 470, a transmitting processor 416, a multi-antenna receiving processor 472, a multi-antenna transmitting processor 471, a transmitting device/receiving device 418, and an antenna 420.

In a transmission from the second communication device 410 to the first communication device 450, at the second communication device 410, upper-layer data packets from the core network are provided to the controller/processor 475. The controller/processor 475 implements the functionality of an L2 layer. In the transmission from the second communication device 410 to the first communication device 450, the controller/processor 475 provides header compression, encryption, packet segmentation and reordering, multiplexing between logical and transport channels, and radio resource allocation to the first communication device 450 based on various priority metrics. The controller/processor 475 is also responsible for retransmission of lost packets and signaling to the first communication device 450. The transmitting processor 416 and the multi-antenna transmitting processor 471 implement various signal processing functions for an L1 layer (i.e., a physical layer). The transmitting processor 416 implements coding and interleaving to facilitate forward error correction (FEC) at the second communication device 410 and mapping of signal constellations based on various modulation solutions (e.g., binary phase shift keying (BPSK), quadrature phase shift keying (QPSK), M-phase shift keying (M-PSK), and M-quadrature amplitude modulation (M-QAM)). The multi-antenna transmitting processor 471 performs digital spatial precoding, comprising codebook-based precoding and non-codebook-based precoding, and beamforming processing on the coded and modulated symbols to generate one or more spatial streams. The transmitting processor 416 then maps each spatial stream to subcarriers, multiplexes with a reference signal (e.g., pilot) in the time domain and/or frequency domain, and then uses an inverse fast Fourier transform (IFFT) to produce a physical channel that carries a time-domain multi-carrier symbol stream. The multi-antenna transmitting processor 471 then performs sending analog precoding/beamforming operations on the time-domain multi-carrier symbol stream. Each transmitting device 418 converts a baseband multi-carrier symbol stream provided by the multi-antenna transmitting processor 471 into a radio frequency stream, which is then provided to different antennas 420.

In the transmission from the second communication device 410 to the first communication device 450, at the first communication device 450, each receiving device 454 receives a signal through its corresponding antenna 452. Each receiving device 454 recovers information modulated onto a radio frequency carrier and converts the radio frequency stream into a baseband multi-carrier symbol stream provided to the receiving processor 456. The receiving processor 456 and the multi-antenna receiving processor 458 implement various signal processing functions of the L1 layer. The multi-antenna receiving processor 458 performs receiving analog precoding/beamforming operations on the baseband multi-carrier symbol stream from the receiving device 454. The receiving processor 456 converts the baseband multi-carrier symbol stream subjected to the receiving analog precoding/beamforming operations from the time domain to the frequency domain using a fast Fourier transform (FFT). In the frequency domain, a physical layer data signal and the reference signal are demultiplexed by the receiving processor 456, wherein the reference signal is used for channel estimation, and the data signal is subjected to multi-antenna detection in the multi-antenna receiving processor 458 to recover any spatial streams destined for the first communication device 450. Symbols on each spatial stream are demodulated and recovered in the receiving processor 456, and a soft decision is generated. The receiving processor 456 then decodes and deinterleaves the soft decision to recover upper-layer data and control signals transmitted by the second communication device 410 on the physical channel. The upper-layer data and control signals are then provided to the controller/processor 459. The controller/processor 459 implements functions of the L2 layer. The controller/processor 459 may be associated with the memory 460 storing program codes and data. The memory 460 may be referred to as a computer-readable medium. In the transmission from the second communication device 410 to the second communication device 450, the controller/processor 459 provides demultiplexing between transport and logical channels, packet reassembly, decryption, header decompression, and control signal processing to recover upper-layer data packets from the core network. The upper-layer data packets are then provided to all protocol layers above the L2 layer. Various control signals may also be provided to an L3 for L3 processing.

In a transmission from the first communication device 450 to the second communication device 410, at the first communication device 450, the data source 467 is used for providing the upper-layer data packets to the controller/processor 459. The data source 467 represents all protocol layers above the L2 layer. Similar to the sending function at the second communication device 410 as described in the transmission from the second communication device 410 to the first communication device 450, the controller/processor 459 implements header compression, encryption, packet segmentation and reordering, and multiplexing between logical and transport channels based on radio resource allocation, and implements the function of the L2 layer for the user plane and the control plane. The controller/processor 459 is also responsible for retransmission of lost packets and signaling to the second communication device 410. The transmitting processor 468 executes modulation mapping and channel coding processing, the multi-antenna transmitting processor 457 performs digital multi-antenna spatial precoding, comprising codebook-based precoding and non-codebook-based precoding, and beamforming processing, and then the transmitting processor 468 modulates the generated spatial stream into a multi-carrier/single-carrier symbol stream, which is then provided to different antennas 452 via the transmitting device 454 after the analog precoding/beamforming operations in the multi-antenna transmitting processor 457. Each transmitting device 454 first converts the baseband symbol stream provided by the multi-antenna transmitting processor 457 into the radio frequency symbol stream, which is then provided to the antenna 452.

In the transmission from the first communication device 450 to the second communication device 410, the function at the second communication device 410 is similar to the receiving function at the first communication device 450 described in the transmission from the second communication device 410 to the first communication device 450. Each receiving device 418 receives a radio frequency signal through its corresponding antenna 420, converts the received radio frequency signal into a baseband signal, and provides the baseband signal to the multi-antenna receiving processor 472 and the receiving processor 470. The receiving processor 470 and the multi-antenna receiving processor 472 jointly implement functions of the L1 layer. The controller/processor 475 implements functions of the L2 layer. The controller/processor 475 may be associated with the memory 476 storing program codes and data. The memory 476 may be referred to as a computer-readable medium. In the transmission from the first communication device 450 to the second communication device 410, the controller/processor 475 provides demultiplexing between transport and logical channels, packet reassembly, decryption, header decompression, and control signal processing to recover upper-layer data packets from UE450. The upper-layer data packets from the controller/processor 475 may be provided to the core network.

As one embodiment, the first communication device 450 comprises: at least one processor and at least one memory, wherein the at least one memory comprises computer program codes; and the at least one memory and the computer program codes are configured to be used together with the at least one processor, and the first communication device 450 at least: sends a first signal; receives a second signal; and determines a first timing advance, wherein the first signal triggers the second signal; the second signal is an echo signal of the first signal; determination of the first timing advance depends on a first duration; and the first duration depends on a duration between a moment of sending the first signal and a moment of receiving the second signal.

As one embodiment, the first communication device 450 comprises: a memory storing a computer-readable instruction program, wherein the computer-readable instruction program generates an action when executed by at least one processor, and the action comprises: sending the first signal; receiving the second signal; and determining the first timing advance, wherein the first signal triggers the second signal; the second signal is the echo signal of the first signal; the determination of the first timing advance depends on the first duration; and the first duration depends on the duration between the moment of sending the first signal and the moment of receiving the second signal.

As one embodiment, the second communication device 410 corresponds to a second node in the present application; the second communication device 410 comprises: at least one processor and at least one memory, wherein the at least one memory comprises computer program codes; and the at least one memory and the computer program codes are configured to be used together with the at least one processor. The second communication device 410 at least: receives the first signal; and sends the second signal, wherein the first signal triggers the second signal; the second signal is the echo signal of the first signal; the determination of the first timing advance depends on the first duration; and the first duration depends on the duration between the moment of sending the first signal and the moment of receiving the second signal.

As one embodiment, the second communication device 410 corresponds to the second node in the present application; the second communication device 410 comprises: a memory storing a computer-readable instruction program, wherein the computer-readable instruction program generates an action when executed by at least one processor, and the action comprises: receiving the first signal; and sending the second signal, wherein the first signal triggers the second signal; the second signal is the echo signal of the first signal; the determination of the first timing advance depends on the first duration; and the first duration depends on the duration between the moment of sending the first signal and the moment of receiving the second signal.

As one embodiment, at least one of the antenna 452, the receiving device 454, the receiving processor 456, and the controller/processor 459 is used for receiving a first RRC message.

As one embodiment, at least one of the antenna 420, the transmitting device 418, the transmitting processor 416, and the controller/processor 475 is used for sending the first RRC message.

As one embodiment, at least one of the antenna 452, the receiving device 454, the receiving processor 456, and the controller/processor 459 is used for receiving the second signal.

As one embodiment, at least one of the antenna 420, the transmitting device 418, the transmitting processor 416, and the controller/processor 475 is used for sending the second signal.

As one embodiment, at least one of the antenna 452, the receiving device 454, the receiving processor 456, and the controller/processor 459 is used for receiving first signaling.

As one embodiment, at least one of the antenna 420, the transmitting device 418, the transmitting processor 416, and the controller/processor 475 is used for sending the first signaling.

As one embodiment, at least one of the antenna 452, the transmitting device 454, the transmitting processor 468, and the controller/processor 459 is used for sending the first signal.

As one embodiment, at least one of the antenna 420, the receiving device 418, the receiving processor 470, and the controller/processor 475 is used for receiving the first signal.

As one embodiment, the first communication device 450 corresponds to a first node in the present application.

As one embodiment, the second communication device 410 corresponds to the second node in the present application.

As one embodiment, the first communication device 450 is one piece of user equipment.

As one embodiment, the first communication device 450 is one base station device.

As one embodiment, the first communication device 450 is one relay device.

As one embodiment, the second communication device 410 is one piece of user equipment.

As one embodiment, the second communication device 410 is one base station device.

As one embodiment, the second communication device 410 is one relay device.

### Embodiment 5

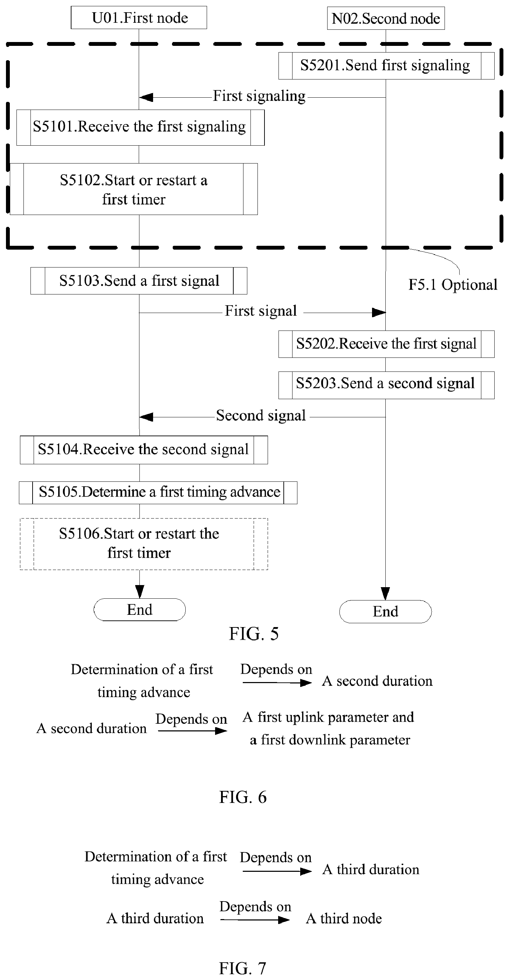

Embodiment 5 illustrates a flowchart of a wireless signal transmission according to one embodiment of the present application, as shown in FIG. 5. It is particularly explained that an order in this example does not limit an order of signal transmission and an order of implementation in the present application.

For **a first node U01**, in step S5101, first signaling is received; in step S5102, a first timer is started or restarted in response to the first signaling being received; in step S5103, a first signal is sent; in step S5104, a second signal is received; in step S5105, a first timing advance is determined; and in step S5106, the first timer is started or restarted in response to the second signal being received.

For a **second node N02**, in step S5201, the first signaling is sent; in step S5202, the first signal is received; and in step S5203, the second signal is sent.

In Embodiment 5, the first signal triggers the second signal; the second signal is an echo signal of the first signal; determination of the first timing advance depends on a first duration; and the first duration depends on a duration between a moment of sending the first signal and a moment of receiving the second signal.

As one embodiment, the first signaling comprises one Timing Advance Command field, and the one Timing Advance Command field in the first signaling indicates a second timing advance; andthe behavior of sending the first signal depends on the first timer expiring.

As one embodiment, the step S5105 is optional.

As one embodiment, the step S5105 exists.

As one embodiment, the step S5105 does not exist.

As one embodiment, a dotted-line block F5.1 is optional.

As one embodiment, the dotted-line block F5.1 exists.

As one embodiment, the dotted-line block F5.1 does not exist.

As one embodiment, the action of starting or restarting the first timer in response to the second signal being received means that: the second signal being received triggers the starting or restarting of the first timer.

As one embodiment, the action of starting or restarting the first timer in response to the second signal being received means that: after the second signal is received, the first timer is started or restarted.

As one embodiment, the action of starting or restarting the first timer in response to the second signal being received means that: after the second signal is received, the behavior of the first node completing estimation of the first timing advance triggers the starting or restarting of the first timer.

As one embodiment, when the first timer is restarted or started, a length of the first timer depends on the second signal.

As one sub-embodiment of the above embodiment, the length of the first timer is related to a distance estimation value estimated by the first node through the second signal.

As one sub-embodiment of the above embodiment, the length of the first timer is related to a magnitude of the first timing advance estimated by the first node through the second signal.

As one sub-embodiment of the above embodiment, the length of the first timer is related to a speed estimation value estimated by the first node through the second signal.

As one sub-embodiment of the above embodiment, the length of the first timer is related to distance estimation accuracy estimated by the first node through the second signal.

As one sub-embodiment of the above embodiment, the length of the first timer is related to speed estimation accuracy estimated by the first node through the second signal.

As one sub-embodiment of the above embodiment, the length of the first timer is related to a position of the first node estimated by the first node through the second signal.

As one embodiment, reception of the first signaling is earlier than sending of the first signal.

As one embodiment, the reception of the first signaling is later than the sending of the first signal.

As one embodiment, the first signaling is received during a random access procedure; and in response to a first message being sent, the first signaling is monitored.

As one sub-embodiment of the above embodiment, the first message is one Preamble.

As one sub-embodiment of the above embodiment, the first message is one piece of MSGA.

As one sub-embodiment of the above embodiment, when the first signaling is received, ra-ResponseWindow is running; and in response to the first message being sent, the ra-ResponseWindow is started.

As one sub-embodiment of the above embodiment, when the first signaling is received, msgB-ResponseWindow is running; and in response to the first message being sent, the msgB-ResponseWindow is started.

As one embodiment, the first signaling is not received in the random access procedure.

As one sub-embodiment of the above embodiment, the first signaling comprises one TAG ID field, and the one TAG ID field indicates a first TAG.

As one embodiment, the first signaling comprises one Timing Advance Command field, and the first signaling indicates a first cell.

As one sub-embodiment of the above embodiment, in response to the first signaling being received, configuration information of the first cell is applied.

As one embodiment, both the second timing advance and the first timing advance are used for the first cell.

As one embodiment, both the second timing advance and the first timing advance are used for the first TAG.

As one embodiment, the second timing advance is an adjustment value of one timing advance.

As one embodiment, the second timing advance is an initial value of one timing advance.

As one embodiment, the one Timing Advance Command field in the first signaling occupies 12 bits.

As one embodiment, the one Timing Advance Command field in the first signaling occupies 6 bits.

As one embodiment, the first signaling is transmitted through a PDSCH.

As one embodiment, the first signaling is one RRC message.

As one embodiment, the first signaling is one MAC CE.

As one embodiment, the first signaling is one Timing Advance Command MAC CE.

As one embodiment, the first signaling is one Absolute Timing Advance Command MAC CE.

As one embodiment, the first signaling is one RAR.

As one embodiment, the first signaling is one MAC RAR.

As one embodiment, the first signaling is one fallbackRAR.

As one embodiment, the first signaling is one successRAR.

As one embodiment, the first signaling is one handover command.

As one embodiment, the first signaling is one LTM Switch Command.

As one embodiment, the first signaling is transmitted through a PDCCH.

As one embodiment, the first signaling is one piece of DCI.

As one embodiment, the phrase "determination of the first timing advance" means that: the first node determines the first timing advance through an output of an artificial intelligence processing system.

As one embodiment, the action of the one TAC (Timing Advance Command) field in the first signaling indicating the second timing advance means that: a TAC field indicates the second timing advance through open-loop control.

As one sub-embodiment of the above embodiment, a value of T_A in the TAC field in the first signaling is from 0 to 3846.

As one embodiment, the action of the one TAC field in the first signaling indicating the second timing advance means that: the TAC field indicates the second timing advance through closed-loop control.

As one sub-embodiment of the above embodiment, the value of T_A in the TAC field in the first signaling is from 0 to 63.

As one embodiment, the second timing advance is related to the TAC field in the first signaling and a subcarrier spacing.

As one embodiment, the first timer is one TAT.

As one embodiment, the first timer is one timeAlignmentTimer.

As one embodiment, the length of the first timer is configuration-based.

As one embodiment, the first timer is per TAG-configured.

As one embodiment, the length of the first timer may be 500ms or 750ms.

As one embodiment, the length of the first timer may be Inf.

As one embodiment, the length of the first timer may be infinity.

As one embodiment, the action of starting or restarting the first timer in response to the first signaling being received means: starting or restarting the first timer while applying a corresponding configuration of a TAC comprised in the first signaling in response to the first signaling being received.

As one embodiment, the action of starting or restarting the first timer in response to the first signaling being received means: starting or restarting the first timer after applying the corresponding configuration of the TAC comprised in the first signaling in response to the first signaling being received.

As one embodiment, the action of starting or restarting the first timer in response to the first signaling being received means: applying the corresponding configuration of the TAC comprised in the first signaling in response to the first signaling being received, and starting or restarting the first timer in response to the corresponding configuration of the TAC being successfully applied.

As one embodiment, the action of the behavior of sending the first signal depending on the first timer expiring means that: expiry of the first timer triggers the sending of the first signal.

As one embodiment, the action of the behavior of sending the first signal depending on the first timer expiring means that: when the first timer expires, the first signal is sent.

As one embodiment, the action of the behavior of sending the first signal depending on the first timer expiring means that: when the first timer expires, the first signal is allowed to be sent.

As one embodiment, the action of the behavior of sending the first signal depending on the first timer expiring means that: the first signal is sent after the first timer expires.

As one embodiment, the action of the behavior of sending the first signal depending on the first timer expiring means that: in a state in which the first timer expires, the first signal is sent when there is an uplink transmission requirement.

As one embodiment, the action of the behavior of sending the first signal depending on the first timer expiring means that: the first signal is sent while the first timer is running and a second time interval remains before expiry.

As one sub-embodiment of the above embodiment, the second time interval is preconfigured.

As one sub-embodiment of the above embodiment, the second time interval is network-configured.

As one sub-embodiment of the above embodiment, the second time interval is UE-determined.

### Embodiment 6

Embodiment 6 illustrates a schematic diagram of an interrelationship among a first timing advance and a second duration as well as a first uplink parameter and a first downlink parameter according to one embodiment of the present application, as shown in FIG. 6.

In Embodiment 6, determination of the first timing advance depends on the second duration; and the second duration depends on the first uplink parameter and the first downlink parameter.

As one embodiment, the first uplink parameter is an uplink carrier, and the first downlink parameter is a downlink carrier.

As one embodiment, the first uplink parameter comprises an uplink carrier, and the first downlink parameter comprises a downlink carrier.

As one embodiment, the first uplink parameter is an uplink subcarrier spacing, and the first downlink parameter is a downlink subcarrier spacing.

As one embodiment, the first uplink parameter comprises the uplink subcarrier spacing, and the first downlink parameter comprises the downlink subcarrier spacing.

As one embodiment, the first uplink parameter comprises an uplink frequency, and the first downlink parameter comprises a downlink frequency.

As one embodiment, the first uplink parameter is an uplink BWP, and the first downlink parameter is a downlink BWP.

As one embodiment, the first uplink parameter comprises the uplink BWP, and the first downlink parameter comprises the downlink BWP.

As one embodiment, the first uplink parameter is used for an SRS.

As one embodiment, the first uplink parameter is used for a PUSCH.

As one embodiment, the first uplink parameter is used for a PUCCH.

As one embodiment, the first uplink parameter is used for the PUSCH/the SRS/the PUCCH.

As one embodiment, the first uplink parameter is used for a PRACH.

As one embodiment, the first downlink parameter is used for a CSI-RS.

As one embodiment, the first downlink parameter is used for a PRS.

As one embodiment, the first downlink parameter is used for an SSB.

As one embodiment, the first downlink parameter is used for a PDSCH.

As one embodiment, the first downlink parameter is used for a PDCCH.

As one embodiment, a first node receives one RRC message, and the one RRC message configures the first uplink parameter and the first downlink parameter.

As one embodiment, the second duration is one offset of the first timing advance.

As one embodiment, the second duration is preconfigured.

As one embodiment, the second duration is default.

As one embodiment, the second duration is a positive integer number of time units.

As one embodiment, the second duration is related to a third parameter and the first uplink parameter.

As one embodiment, the determination of the first timing advance depends on the second duration only when the third parameter and the first uplink parameter are applied.

As one embodiment, the determination of the first timing advance depends on the second duration only when a first signal is sent according to the third parameter.

As one embodiment, the determination of the first timing advance depends on a first duration and the second duration.

As one embodiment, the determination of the first timing advance depends on a difference between the first duration and the second duration.

As one embodiment, the first timing advance is linearly related to the difference between the first duration and the second duration.

As one embodiment, the determination of the first timing advance depends on half of the difference between the first duration and the second duration.

As one embodiment, the first timing advance is not greater than half of the difference between the first duration and the second duration.

As one embodiment, the first timing advance is linearly related to half of the difference between the first duration and the second duration.

As one embodiment, the first timing advance is equal to half of the difference between the first duration and the second duration.

As one embodiment, the first timing advance = the first duration + the second duration.

As one embodiment, the first timing advance = the first duration - the second duration.

As one embodiment, the first timing advance = (the first duration - the second duration)/2.

As one embodiment, the first timing advance = (the first duration + the second duration)/2.

As one embodiment, the first timing advance = the first duration/2 - the second duration.

As one embodiment, the first timing advance = the first duration/2 + the second duration.

As one embodiment, the second duration depends on a difference between a first uplink time and a first downlink time, the first uplink time depends on an uplink parameter of the first node, and the first downlink time depends on a downlink parameter of the first node.

As one embodiment, the second duration is equal to the difference between the first uplink time and the first downlink time.

As one embodiment, the second duration is equal to an absolute value of the difference between the first uplink time and the first downlink time.

As one embodiment, the second duration depends on a difference between the first downlink time and the first uplink time, the first uplink time depends on the uplink parameter of the first node, and the first downlink time depends on the downlink parameter of the first node.

As one embodiment, the second duration is equal to the difference between the first downlink time and the first uplink time.

### Embodiment 7

Embodiment 7 illustrates a schematic diagram of an interrelationship among a first timing advance and a third duration as well as a third node according to one embodiment of the present application, as shown in FIG. 7.

In Embodiment 7, determination of the first timing advance depends on the third duration, and the third duration depends on the third node; and the third duration is preconfigured or the third duration is default.

As one embodiment, the third node is one piece of RIS.

As one embodiment, the third node is one relay.

As one embodiment, the third duration is one offset of the first timing advance.

As one embodiment, the third duration is preconfigured.

As one embodiment, the third duration is default.

As one embodiment, the third duration is a positive integer number of time units.

As one embodiment, the third duration is related to a subcarrier spacing.

As one embodiment, the third duration is related to a BWP.

As one embodiment, the third duration is related to whether the third node is capable of power amplification.

As one embodiment, the third duration is related to a working mode of a feeding module of the third node.

As one sub-embodiment of the above embodiment, the third duration is related to whether the third node is in a far-field reflective feeding mode.

As one sub-embodiment of the above embodiment, the third duration is related to whether the third node is in a far-field transmissive feeding mode.

As one sub-embodiment of the above embodiment, the third duration is related to whether the third node is in an active-passive integrated feeding mode.

As one sub-embodiment of the above embodiment, the third duration is related to whether the third node is in a near-field transmissive feeding mode.

As one sub-embodiment of the above embodiment, the third duration is related to whether the third node is in a reflection-transmission integrated mode.

As one embodiment, the third duration is related to a device material of the third node.

As one embodiment, the third duration is related to a working frequency band of the third node.

As one embodiment, the third duration is related to whether a deployment mode of the third node is network-controlled or independently deployed.

As one embodiment, the third duration is related to whether the third node performs information modulation.

As one embodiment, the third duration is related to whether the third node performs channel regulation.

As one embodiment, the third duration is related to a beamforming process of the third node.

As one embodiment, the first timing advance is not greater than a difference between a first duration and the third duration.

As one embodiment, when transmission paths of a first signal and a second signal comprise the third node, the determination of the first timing advance depends on the third duration.

As one embodiment, only when the transmission paths of the first signal and the second signal comprise the third node, the determination of the first timing advance depends on the third duration.

As one embodiment, when the transmission paths of the first signal or the second signal comprise the third node, the determination of the first timing advance depends on the third duration.

As one embodiment, only when the transmission paths of the first signal or the second signal comprise the third node, the determination of the first timing advance depends on the third duration.

As one embodiment, the determination of the first timing advance depends on at least the first two of the first duration, the third duration, and a second duration.

As one embodiment, the determination of the first timing advance depends on the first duration and the third duration.

As one embodiment, the determination of the first timing advance depends on the first duration, the second duration, and the third duration.

As one embodiment, the determination of the first timing advance depends on the second duration, and the determination of the first timing advance depends on the third duration.

As one embodiment, the determination of the first timing advance depends on the difference between the first duration and the third duration.

As one embodiment, the first timing advance is linearly related to the difference between the first duration and the third duration.

As one embodiment, the determination of the first timing advance depends on half of the difference between the first duration and the third duration.

As one embodiment, the first timing advance is not greater than half of the difference between the first duration and the third duration.

As one embodiment, the first timing advance is linearly related to half of the difference between the first duration and the third duration.

As one embodiment, the first timing advance is equal to half of the difference between the first duration and the third duration.

As one embodiment, the first timing advance = the first duration + the third duration.

As one embodiment, the first timing advance = the first duration - the third duration.

As one embodiment, the first timing advance = (the first duration - the third duration)/2.

As one embodiment, the first timing advance = (the first duration + the third duration)/2.

As one embodiment, the first timing advance = the first duration/2 - the third duration.

As one embodiment, the first timing advance = the first duration/2 + the third duration.

As one embodiment, the first timing advance = the first duration + the second duration + the third duration.

As one embodiment, the first timing advance = the first duration - the second duration - the third duration.

As one embodiment, the first timing advance = (the first duration - the second duration - the third duration)/2.

As one embodiment, the first timing advance = (the first duration + the second duration + the third duration)/2.

As one embodiment, the first timing advance = the first duration/2 - the second duration - the third duration.

As one embodiment, the first timing advance = the first duration/2 + the second duration + the third duration.

### Embodiment 8

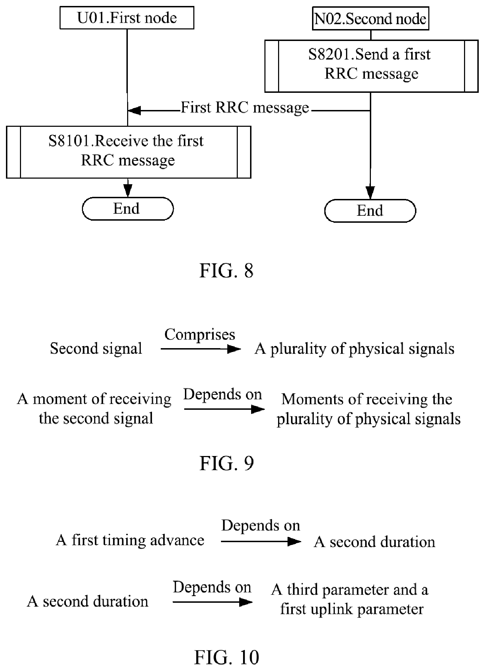

Embodiment 8 illustrates a schematic diagram of a relationship between a first RRC message and a first timing advance according to one embodiment of the present application, as shown in FIG. 8.

For **a second node N02**, in step S8201, the first RRC message is sent.

For **a first node U01**, in step S8101, the first RRC message is received, and the first RRC message comprises a fourth duration.

In Embodiment 8, determination of the first timing advance depends on the fourth duration.

As one embodiment, one field in the first RRC message indicates the fourth duration.

As one embodiment, one field in the first RRC message configures the fourth duration.

As one embodiment, the fourth duration is one offset of the first timing advance.

As one embodiment, the fourth duration is N_{TA,offset}; and the one field in the first RRC message is n-TimingAdvanceOffset.

As one embodiment, the fourth duration is predefined.

As one embodiment, the fourth duration has a default value.

As one embodiment, the default value of the fourth duration is related to a duplex mode.

As one embodiment, the default value of the fourth duration is related to a frequency range.

As one sub-embodiment of the above embodiment, when working at an FR2 frequency band, the fourth duration is 13792*Tc.

As one embodiment, the fourth duration is N_{TA,offset}*Tc.

As one embodiment, the fourth duration is not N_{TA,offset}.

As one embodiment, the fourth duration depends on the N_{TA,offset}.

As one embodiment, the fourth duration is directly proportional to a value of the N_{TA,offset}.

As one embodiment, the fourth duration is linearly related to the value of the N_{TA,offset}.

As one embodiment, the fourth duration is related to a first signal and a second signal.

As one embodiment, the fourth duration is related to a time interval between the first signal and the second signal.

As one embodiment, the fourth duration is related to a time interval between receiving the first signal and sending the second signal by the second node.

As one embodiment, the determination of the first timing advance depends on at least the first two of a first duration, the fourth duration, a second duration, and a third duration.

As one embodiment, the determination of the first timing advance depends on the first duration and the fourth duration.

As one embodiment, the determination of the first timing advance depends on the first duration, the second duration, and the fourth duration.

As one embodiment, the determination of the first timing advance depends on the first duration, the third duration, and the fourth duration.

As one embodiment, the determination of the first timing advance depends on the first duration, the second duration, the third duration, and the fourth duration.

As one embodiment, the phrase "determination of the first timing advance depends on the fourth duration" means that: calculation of the first timing advance depends on the fourth duration.

As one embodiment, the phrase "determination of the first timing advance depends on the fourth duration" means that: the first timing advance is related to the fourth duration.

As one embodiment, the phrase "determination of the first timing advance depends on the fourth duration" means that: the first timing advance is linearly related to the fourth duration.

As one embodiment, the phrase "determination of the first timing advance depends on the fourth duration" means that: the first timing advance is expressed in a form of a sum of the fourth duration and certain other items.

As one embodiment, the first timing advance is linearly related to a difference between the first duration and the fourth duration.

As one embodiment, the first timing advance is linearly related to a sum of the first duration and the fourth duration.

As one embodiment, the first timing advance is linearly related to a difference between half of the first duration and the fourth duration.

As one embodiment, the first timing advance is linearly related to a sum of half of the first duration and the fourth duration.

As one embodiment, the first timing advance is not greater than the difference between the first duration and the fourth duration.

As one embodiment, the first timing advance is not greater than the sum of the first duration and the fourth duration.

As one embodiment, the first timing advance is not greater than the difference between half of the first duration and the fourth duration.

As one embodiment, the first timing advance is not greater than the sum of half of the first duration and the fourth duration.

As one embodiment, the first timing advance is equal to the difference between the first duration and the fourth duration.

As one embodiment, the first timing advance is equal to the sum of the first duration and the fourth duration.

As one embodiment, the first timing advance is equal to the difference between half of the first duration and the fourth duration.

As one embodiment, the first timing advance is equal to the sum of half of the first duration and the fourth duration.

As one embodiment, the first timing advance = the first duration + the fourth duration.

As one embodiment, the first timing advance = the first duration - the fourth duration.

As one embodiment, the first timing advance = the first duration/2 - the fourth duration.

As one embodiment, the first timing advance = the first duration/2 + the fourth duration.

As one embodiment, the first timing advance = (the first duration - the fourth duration)/2.

As one embodiment, the first timing advance = (the first duration + the fourth duration)/2.

As one embodiment, the first timing advance = the first duration + the second duration + the third duration + the fourth duration.

As one embodiment, the first timing advance = the first duration - the second duration - the third duration - the fourth duration.

As one embodiment, the first timing advance = (the first duration - the second duration - the third duration)/2 + the fourth duration.

As one embodiment, the first timing advance = (the first duration + the second duration + the third duration)/2 + the fourth duration.

As one embodiment, the first timing advance = the first duration/2 - the second duration - the third duration - the fourth duration.

As one embodiment, the first timing advance = the first duration/2 + the second duration + the third duration + the fourth duration.

### Embodiment 9

Embodiment 9 illustrates a schematic diagram of a relationship between a second signal and a moment of receiving the second signal and a plurality of physical signals according to one embodiment of the present application, as shown in FIG. 9.

In Embodiment 9, the second signal comprises the plurality of physical signals, and the moment of receiving the second signal depends on moments of receiving the plurality of physical signals.

As one embodiment, the phrase "the second signal comprises the plurality of physical signals" means that: the second signal comprises one or more multipath components.

As one embodiment, the phrase "the second signal comprises the plurality of physical signals" means that: the second signal comprises one or more multipath components, and a single multipath component comprises one or more clusters.

As one embodiment, the phrase "the second signal comprises the plurality of physical signals" means that: a reception matrix of a first node for the second signal has one or more peaks after domain transformation along a subcarrier sequence or a symbol sequence.

As one embodiment, the moment of receiving the second signal is a moment of receiving one earliest received physical signal in the plurality of physical signals.

As one embodiment, the moment of receiving the second signal is a moment of receiving one latest received physical signal in the plurality of physical signals.

As one embodiment, the moment of receiving the second signal is an average value of the moments of receiving the plurality of physical signals.

As one embodiment, the moment of receiving the second signal is a weighted average value of reception strength of the moments of receiving the plurality of physical signals.

As one embodiment, the moment of receiving the second signal is one moment set.

As one sub-embodiment of the above embodiment, the moment set comprises moments of receiving all of the plurality of physical signals.

As one sub-embodiment of the above embodiment, the moment set comprises moments of receiving strongest K physical signals in the plurality of physical signals.

As one sub-embodiment of the above embodiment, the moment set comprises moments of receiving physical signals corresponding to strongest first K peaks of the reception matrix of the first node for the second signal after domain transformation along the subcarrier sequence or the symbol sequence.

As one sub-embodiment of the above embodiment, K is one positive integer.

As one sub-embodiment of the above embodiment, the K has a default value of 1.

As one sub-embodiment of the above embodiment, the K is preconfigured.

As one sub-embodiment of the above embodiment, the K is UE-determined.

### Embodiment 10

Embodiment 10 illustrates a schematic diagram of determination of a first timing advance depending on a second duration according to another embodiment of the present application, as shown in FIG. 10.

In Embodiment 10, the determination of the first timing advance depends on the second duration; the second duration depends on a third parameter and a first uplink parameter; a first signal is sent according to the third parameter; and the first uplink parameter is used for at least one of a PUSCH, or an SRS, or a PUCCH.

As one embodiment, the third parameter is configured for ISAC.

As one embodiment, the third parameter is ISAC-dedicated.

As one embodiment, the third parameter is radar-signal-dedicated.

As one embodiment, the third parameter comprises a time domain resource.

As one embodiment, the third parameter comprises a frequency domain resource.

As one embodiment, the third parameter comprises a sending period.

As one embodiment, the third parameter comprises transmission power.

As one embodiment, the third parameter comprises a spatial filtering parameter.

As one embodiment, the third parameter comprises a beam width.

As one embodiment, the third parameter comprises a beam scanning angle range.

As one embodiment, the second duration is related to the third parameter and the first uplink parameter.

As one embodiment, the determination of the first timing advance depends on the second duration only when the third parameter and the first uplink parameter are applied.

As one embodiment, the determination of the first timing advance depends on the second duration only when the first signal is sent according to the third parameter.

As one embodiment, the second duration is one offset of the first timing advance.

As one embodiment, the second duration is preconfigured.

As one embodiment, the second duration is default.

As one embodiment, the second duration is a positive integer number of time units.

As one embodiment, the determination of the first timing advance depends on a first duration and the second duration.

As one embodiment, the determination of the first timing advance depends on a difference between the first duration and the second duration.

As one embodiment, the first timing advance is linearly related to the difference between the first duration and the second duration.

As one embodiment, the determination of the first timing advance depends on half of the difference between the first duration and the second duration.

As one embodiment, the first timing advance is not greater than half of the difference between the first duration and the second duration.

As one embodiment, the first timing advance is linearly related to half of the difference between the first duration and the second duration.

As one embodiment, the first timing advance is equal to half of the difference between the first duration and the second duration.

As one embodiment, the first timing advance = the first duration + the second duration.

As one embodiment, the first timing advance = the first duration - the second duration.

As one embodiment, the first timing advance = (the first duration - the second duration)/2.

As one embodiment, the first timing advance = (the first duration + the second duration)/2.

As one embodiment, the first timing advance = the first duration/2 - the second duration.

As one embodiment, the first timing advance = the first duration/2 + the second duration.

As one embodiment, the second duration depends on a difference between a first uplink time and a first downlink time, the first uplink time depends on an uplink parameter of a first node, and the first downlink time depends on a downlink parameter of the first node.

As one embodiment, the second duration is equal to the difference between the first uplink time and the first downlink time.

As one embodiment, the second duration is equal to an absolute value of the difference between the first uplink time and the first downlink time.

As one embodiment, the second duration depends on a difference between the first downlink time and the first uplink time, the first uplink time depends on the uplink parameter of the first node, and the first downlink time depends on the downlink parameter of the first node.

As one embodiment, the second duration is equal to the difference between the first downlink time and the first uplink time.

### Embodiment 11

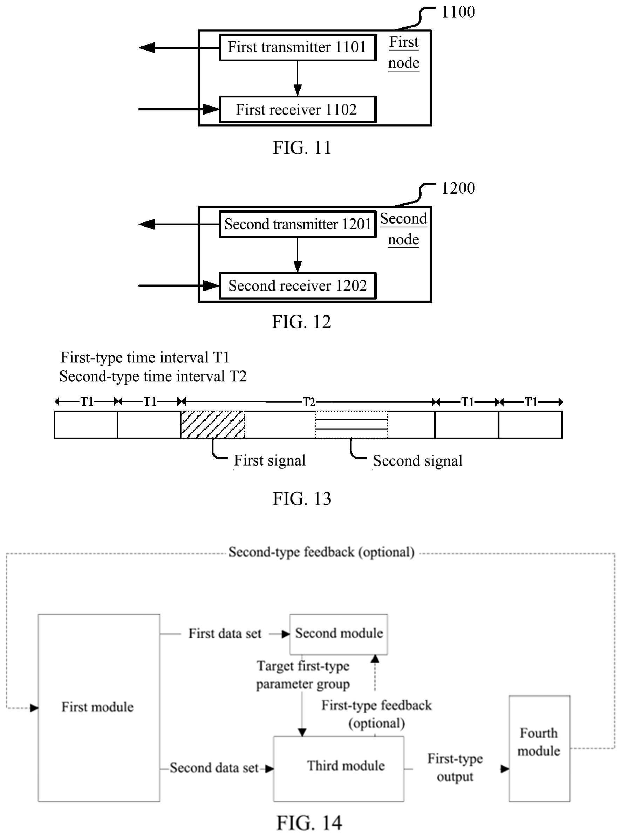

Embodiment 11 illustrates a structural block diagram of a processing apparatus used in a first node according to one embodiment of the present application, as shown in FIG. 11. In FIG. 11, a processing apparatus 1100 in the first node comprises a first transmitter 1101 and a first receiver 1102.
the first transmitter 1101 sends a second signal;
the first transmitter 1101 sends a first signal;
the first receiver 1102 receives the second signal; and a first timing advance is determined.

In Embodiment 11, the first signal triggers the second signal; the second signal is an echo signal of the first signal; determination of the first timing advance depends on a first duration; and the first duration depends on a duration between a moment of sending the first signal and a moment of receiving the second signal.

As one embodiment, the determination of the first timing advance depends on a second duration; and the second duration depends on a first uplink parameter and a first downlink parameter.

As one embodiment, the determination of the first timing advance depends on a third duration, and the third duration depends on a third node; and the third duration is preconfigured or the third duration is default.

As one embodiment, the first receiver 1102 receives a first RRC message, and the first RRC message comprises a fourth duration, wherein the determination of the first timing advance depends on the fourth duration.

As one embodiment, the second signal comprises a plurality of physical signals, and the moment of receiving the second signal depends on moments of receiving the plurality of physical signals.

As one embodiment, the first receiver 1102 receives first signaling, the first signaling comprising one Timing Advance Command field, and the one Timing Advance Command field in the first signaling indicating a second timing advance; and starting or restarting a first timer in response to the first signaling being received, wherein the behavior of sending the first signal depends on the first timer expiring.

As one embodiment, the first receiver 1102 starts or restarts the first timer in response to the second signal being received.

As one embodiment, the first receiver 1102 can receive a radar signal.

As one embodiment, the first receiver 1102 comprises a radar antenna.

As one embodiment, the first receiver 1102 comprises one radar receiving device.

As one embodiment, the first receiver 1102 comprises one radar detector.

As one embodiment, the first transmitter 1101 can send a radar signal.

As one embodiment, the first transmitter 1101 comprises a radar antenna.

As one embodiment, the first transmitter 1101 comprises one radar transmitting device.

As one embodiment, the first receiver 1102 can receive an ISAC signal.

As one embodiment, the first receiver 1102 comprises an ISAC antenna.

As one embodiment, the first receiver 1102 comprises one ISAC receiving device.

As one embodiment, the first receiver 1102 comprises one ISAC detector.

As one embodiment, the first transmitter 1101 can send an ISAC signal.

As one embodiment, the first transmitter 1101 comprises an ISAC antenna.

As one embodiment, the first transmitter 1101 comprises one ISAC transmitting device.

As one embodiment, the first receiver 1102 comprises at least one of an antenna 452 or a receiving device 454 or a multi-antenna receiving processor 458 or a receiving processor 456 or a controller/processor 4511 or a memory 460 or a data source 467 in FIG. 4 of the present application.

As one embodiment, the first receiver 1102 comprises at least the antenna 452 and the receiving device 454 in FIG. 4 of the present application.

As one embodiment, the first transmitter 1101 comprises at least one of the antenna 452 or a transmitting device 454 or a multi-antenna transmitting processor 457 or a transmitting processor 468 or a controller/processor 459 or the memory 460 or the data source 467 in FIG. 4 of the present application.

As one embodiment, the first transmitter 1101 comprises at least the antenna 452 and the transmitting device 454 in FIG. 4 of the present application.

### Embodiment 12

Embodiment 12 illustrates a structural block diagram of a processing apparatus used in a second node according to one embodiment of the present application, as shown in FIG. 12. In

FIG. 12, a processing apparatus 1200 in the second node comprises a second transmitter 1201 and a second receiver 1202.

The second receiver 1202 receives a first signal; and
the second transmitter 1201 sends a second signal.

In Embodiment 12, the first signal triggers the second signal; the second signal is an echo signal of the first signal; determination of a first timing advance depends on a first duration; and the first duration depends on a duration between a moment of sending the first signal and a moment of receiving the second signal.

As one embodiment, a sender of the first signal determines the first timing advance.

As one embodiment, the determination of the first timing advance depends on a second duration; and the second duration depends on a first uplink parameter and a first downlink parameter.

As one embodiment, the determination of the first timing advance depends on a third duration, and the third duration depends on a third node; and the third duration is preconfigured or the third duration is default.

As one embodiment, the second transmitter 1201 sends a first RRC message, and the first RRC message comprises a fourth duration, wherein the determination of the first timing advance depends on the fourth duration.

As one embodiment, the second signal comprises a plurality of physical signals, and the moment of receiving the second signal depends on moments of receiving the plurality of physical signals.

As one embodiment, the second transmitter 1201 sends first signaling, the first signaling comprises one Timing Advance Command field, and the one Timing Advance Command field in the first signaling indicates a second timing advance, wherein the sender of the first signal starts or restarts a first timer in response to the first signaling being received; and the behavior of sending the first signal depends on the first timer expiring.

As one embodiment, the sender of the first signal starts or restarts the first timer in response to the second signal being received.

As one embodiment, the second transmitter 1201 comprises at least one of an antenna 420 or a transmitting device 418 or a multi-antenna transmitting processor 471 or a transmitting processor 416 or a controller/processor 475 or a memory 476 in FIG. 4 of the present application.

As one embodiment, the second transmitter 1201 comprises at least the antenna 420 and the transmitting device 418 in FIG. 4 of the present application.

As one embodiment, the second receiver 1202 comprises at least one of the antenna 420 or a receiving device 418 or a multi-antenna receiving processor 472 or a receiving processor 470 or the controller/processor 475 or the memory 476 in FIG. 4 of the present application.

As one embodiment, the second receiver 1202 comprises at least the antenna 420 and the receiving device 418 in FIG. 4 of the present application.

### Embodiment 13

Embodiment 13 illustrates a schematic diagram of time domain resources occupied by a first signal and a second signal according to one embodiment of the present application, as shown in FIG. 13.

In Embodiment 13, a time domain resource occupied by the first signal and a time domain resource occupied by the second signal are both within a second-type time interval T2 and both outside a first-type time interval T1.

As one embodiment, the first-type time interval is used for communication.

As one embodiment, the first-type time interval is a radio frame.

As one embodiment, the first-type time interval is a half frame.

As one embodiment, the first-type time interval is a radio subframe.

As one embodiment, the first-type time interval is a slot.

As one embodiment, the first-type time interval is a mini slot.

As one embodiment, the first-type time interval is an OFDM symbol.

As one embodiment, the first-type time interval is allocated to a PDCCH.

As one embodiment, the first-type time interval is allocated to a PDSCH.

As one embodiment, the first-type time interval is allocated to a PBCH.

As one embodiment, the first-type time interval is allocated to a PUCCH.

As one embodiment, the first-type time interval is allocated to a PUSCH.

As one embodiment, the first-type time interval is allocated to a PRACH.

As one embodiment, the first-type time interval is used for a reference signal.

As one embodiment, the second-type time interval is used for sensing.

As one embodiment, a moment of sending the first signal is aligned with a start moment of the second-type time interval.

As one embodiment, the moment of sending the first signal is not aligned with the start moment of the second-type time interval.

As one embodiment, sending of the first signal and reception of the second signal do not overlap in a time domain.

As one embodiment, the sending of the first signal and the reception of the second signal overlap in the time domain.

As one embodiment, the sending of the first signal and the reception of the second signal partially overlap in the time domain.

As one embodiment, a time domain length of the first signal is an integer multiple of an OFDM symbol.

As one embodiment, the time domain length of the first signal is an integer multiple of a slot.

As one embodiment, the time domain length of the first signal is an integer multiple of a half frame.

As one embodiment, the time domain length of the first signal is not an integer multiple of an OFDM symbol.

As one embodiment, a time domain length of the second signal is an integer multiple of an OFDM symbol.

As one embodiment, the time domain length of the second signal is an integer multiple of a slot.

As one embodiment, the time domain length of the second signal is an integer multiple of a half frame.

As one embodiment, the time domain length of the second signal is not an integer multiple of an OFDM symbol.

As one embodiment, the time domain length of the second signal is equal to the time domain length of the first signal.

As one embodiment, the time domain length of the second signal is not equal to the time domain length of the first signal.

As one embodiment, the moment of sending the first signal is aligned with a radio frame.

As one embodiment, the moment of sending the first signal is aligned with a slot.

As one embodiment, the moment of sending the first signal is aligned with an OFDM symbol.

As one embodiment, the moment of sending the first signal is not aligned with a radio frame.

As one embodiment, the moment of sending the first signal is not aligned with a slot.

As one embodiment, the moment of sending the first signal is not aligned with an OFDM symbol.

As one embodiment, a portion of the second-type time interval other than the first signal and the second signal is of zero power.

As one embodiment, the portion of the second-type time interval other than the first signal and the second signal is mute.

As one embodiment, the portion of the second-type time interval other than the first signal and the second signal may be used for wireless transmission.

As one embodiment, the portion of the second-type time interval other than the first signal and the second signal may be used for wireless communication.

As one embodiment, an edge of the second-type time interval is aligned with an edge of a first time interval.

As one embodiment, the edge of the second-type time interval is not aligned with the edge of the first time interval.

As one embodiment, this embodiment does not limit other specific implementations of the first signal and the second signal in the present application.

### Embodiment 14

Embodiment 14 illustrates a schematic diagram of an artificial intelligence processing system according to one embodiment of the present application, as shown in FIG. 14. FIG. 14 comprises a first module, a second module, a third module, and a fourth module.

In Embodiment 14, the first module sends a first data set to the second module, the second module generates a target first-type parameter group according to the first data set, the second module sends the generated target first-type parameter group to the third module, and the third module processes a second data set using the target first-type parameter group to obtain a first-type output and then sends the first-type output to the fourth module.

As one embodiment, the first module, the second module, the third module, and the fourth module all belong to a first node.

The above method avoids air interface signaling interaction and shortens a transmission delay.

As one embodiment, the first module, the second module, the third module, and the fourth module belong to the first node and a second node.

As one embodiment, the first module belongs to the first node, and the second module, the third module, and the fourth module all belong to the second node.

The above method balances the hardware complexity and the transmission delay of the first node.

As one embodiment, the first module, the second module, the third module, and the fourth module belong to OAM to which the first node and the second node belong.

As one embodiment, the first module belongs to the first node, and the second module, the third module, and the fourth module all belong to OAM to which the second node belongs.

The above method balances hardware complexity of the first node and accuracy of the first-type output.

As one embodiment, the first module is used for data collection.

As one embodiment, the first module generates at least one of the first data set or the second data set according to at least first information.

As one embodiment, the first module sends the first information; and the first module belongs to the first node.

As one embodiment, at least one of the first data set or the second data set is transmitted through a Uu interface.

As one embodiment, at least one of the first data set or the second data set is transmitted through an inter-module interface.

As one embodiment, at least one of the first data set or the second data set comprises a second signal received by the first node.

As one embodiment, at least one of the first data set or the second data set comprises a first RRC message of the first node.

As one embodiment, at least one of the first data set or the second data set comprises related information of a third node.

As one embodiment, at least one of the first data set or the second data set comprises corresponding physical layer parameters of the first node.

As one embodiment, at least one of the first data set or the second data set comprises a TA of the first node.

As one embodiment, at least one of the first data set or the second data set comprises a TA obtained by the first node based on a random access procedure.

As one embodiment, the second module is used for model training.

As one embodiment, the first data set is training data, the second data set is inference data, the second module is used for training a model, and a trained model is described by the target first-type parameter group.

As one embodiment, the third module is used for model inference.

As one embodiment, the third module constructs a model according to the target first-type parameter group, then inputs the second data set into the constructed model to obtain the first-type output, and then sends the first-type output to the fourth module.

As one embodiment, the third module calculates an error between the first-type output and actual data to determine performance of the trained model; and the actual data is data that is received after the second data set and that is transferred from the first module.

The above embodiment is particularly suitable for UE with an ISAC capability to acquire a TA.

As one embodiment, the third module sends first-type feedback to the second module, and the first-type feedback is used for triggering recalculation or update of the target first-type parameter group.

As one embodiment, the third module recovers a reference data set according to the first-type output, and an error between the reference data set and the second data set is used for generating the first-type feedback.

As one embodiment, the first-type feedback is used for reflecting performance of the trained model; and when the performance of the trained model cannot meet requirements, the second module recalculates the target first-type parameter group.

Typically, when the error is too large or has not been updated for too long, the performance of the trained model is considered to be unable to meet the requirements.

As one embodiment, the fourth module is one Actor.

As one embodiment, the fourth module receives the first-type output from the third module.

As one embodiment, the fourth module executes corresponding actions according to the first-type output.

As one embodiment, the fourth module sends second-type feedback to the first module, the second-type feedback is used for generating the first data set or the second data set, or the second-type feedback is used for triggering sending of the first data set or the second data set.

As one embodiment, the fourth module sends the second-type feedback to the first module, and the second-type feedback is used for triggering execution of the first-type output.

As one embodiment, the first-type output comprises a first timing advance.

As one embodiment, the first-type output comprises a second duration.

As one embodiment, the first-type output comprises a third duration.

As one embodiment, the first-type output comprises a fourth duration.

As one embodiment, the first-type output comprises a first timer length.

As one embodiment, Embodiment 14 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 14.

### Embodiment 15

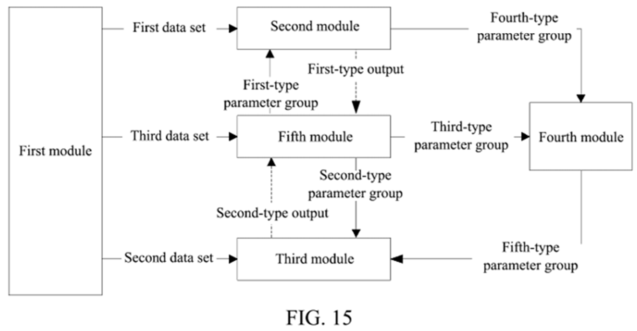

Embodiment 15 illustrates a schematic diagram of an artificial intelligence processing system according to another embodiment of the present application, as shown in FIG. 15. FIG. 15 comprises a first module, a second module, a third module, a fourth module, and a fifth module.

In Embodiment 15, the first module sends a first data set to the second module, the first module sends a second data set to the third module, the first module sends a third data set to the fifth module, the fifth module sends a first-type parameter group to the second module, the fifth module sends a second-type parameter group to the third module, the fifth module sends a third-type parameter group to the fourth module, the second module sends a fourth-type parameter group to the fourth module, and the fourth module sends a fifth-type parameter group to the third module.

As one embodiment, the first module, the second module, the third module, the fourth module, and the fifth module all belong to a first node.

The above method avoids air interface signaling interaction and shortens a transmission delay.

As one embodiment, any one of the first module, the second module, the third module, the fourth module, and the fifth module does not belong to the first node.

The above method reduces hardware complexity of the first node.

As one embodiment, at least the first module in the first module, the second module, the third module, the fourth module, and the fifth module belongs to the first node; and at least one of the first module, the second module, the third module, the fourth module, and the fifth module does not belong to the first node.

The above method balances the hardware complexity and the transmission delay of the first node.

As one embodiment, the first module is used for data collection.

As one embodiment, the first module is responsible for data collection.

As one embodiment, the first module has a data collection function.

As one embodiment, the second module is used for model training.

As one embodiment, the second module is responsible for model training.

As one embodiment, the second module has a model training function.

As one embodiment, the second module executes AI/ML model training.

As one embodiment, the second module executes validation.

As one embodiment, the second module executes testing.

As one embodiment, the second module generates model performance metrics.

As one embodiment, the second module is responsible for data preparation.

As one embodiment, the data preparation comprises at least one of data pre-processing or cleaning or formatting or transformation.

As one embodiment, the third module is used for inference.

As one embodiment, the third module has an inference function.

As one embodiment, the third module is responsible for inference.

As one embodiment, the fourth module is used for model storage.

As one embodiment, the fourth module has a model storage function.

As one embodiment, the fourth module is responsible for storing a trained model.

As one embodiment, the fourth module is responsible for storing a trained model that can be used for executing inference processing.

As one embodiment, the fifth module is used for management.

As one embodiment, the fifth module is responsible for management.

As one embodiment, the fifth module has a management function.

As one embodiment, the first data set is training data.

As one embodiment, the second data set is inference data.

As one embodiment, the third data set is monitoring data.

As one embodiment, the first-type parameter group comprises a monitoring output.

As one embodiment, the second-type parameter group comprises a management instruction.

As one embodiment, the second-type parameter group is used for a fine-tune operation of an inference function.

As one embodiment, the second-type parameter group comprises an identifier of a model.

As one embodiment, the second-type parameter group is used for selecting a model.

As one embodiment, the second-type parameter group is used for switching a model.

As one embodiment, the second-type parameter group is used for activating/deactivating a model.

As one embodiment, the second-type parameter group is used for falling back from an AI-ML operation to a non-AI-ML operation.

As one embodiment, the third-type parameter group comprises a model transfer request.

As one embodiment, the third-type parameter group comprises a model delivery request.

As one embodiment, the fourth-type parameter group comprises a trained model.

As one embodiment, the fourth-type parameter group comprises an updated model.

As one embodiment, the fourth-type parameter group indicates an identifier of a model.

As one embodiment, the fifth-type parameter group comprises model transfer.

As one embodiment, the fifth-type parameter group comprises model delivery.

As one embodiment, the fifth-type parameter group indicates an identifier of a model.

As one embodiment, a first-type output comprises a monitoring output.

As one embodiment, the first-type output exists.

As one embodiment, the first-type output does not exist.

As one embodiment, a second-type output comprises an inference output.

As one embodiment, the second-type output is used by the fifth module for monitoring performance of an AI/ML model.

As one embodiment, the second-type output is used by the fifth module for monitoring performance of an AI/ML function.

As one embodiment, the second-type output exists.

As one embodiment, the second-type output does not exist.

As one embodiment, the artificial intelligence processing system generates or assists in generating at least one of a first timing advance or a second duration or a third duration or a fourth duration or a first timer length.

As one embodiment, the fifth module generates or assists in generating at least one of the first timing advance or the second duration or the third duration or the fourth duration or the first timer length.

As one embodiment, the third module generates or assists in generating at least one of the first timing advance or the second duration or the third duration or the fourth duration or the first timer length.

As one embodiment, the second-type output comprises at least one of the first timing advance or the second duration or the third duration or the fourth duration or the first timer length.

As one embodiment, at least one of the first data set or the second data set or the third data set comprises a second signal.

As one embodiment, at least one of the first data set or the second data set or the third data set comprises a first RRC message.

As one embodiment, at least one of the first data set or the second data set or the third data set comprises relevant information of a third node.

As one embodiment, at least one of the first data set or the second data set or the third data set comprises corresponding physical layer parameters of the first node.

As one embodiment, at least one of the first data set or the second data set or the third data set comprises a TA of the first node.

As one embodiment, at least one of the first data set or the second data set or the third data set comprises a TA obtained by the first node based on a random access procedure.

As one embodiment, Embodiment 13 is only for illustrating that the present application can be used for the artificial intelligence processing system. This embodiment does not limit the application of the present application to a non-artificial intelligence processing system, and this embodiment does not limit the application of the present application to other types of artificial intelligence processing systems to achieve effects equivalent to the artificial intelligence processing system shown in FIG. 13.

Those of ordinary skill in the art may understand that all or part of the steps in the above method can be completed by instructing relevant hardware through a program, and the program can be stored in a computer-readable storage medium, such as a read-only memory, a hard disk, or an optical disk. Optionally, all or part of the steps in the above embodiments may also be implemented using one or more integrated circuits. Accordingly, each module unit in the above embodiments may be implemented in the form of hardware or in the form of a software function module. The present application is not limited to any specific form of software and hardware combination. The user equipment, terminal and UE in the present application include but are not limited to drones, communication modules on drones, remote-controlled airplanes, aircrafts, small airplanes, mobile phones, tablets, notebooks, vehicle-mounted communication devices, wireless sensors, network cards, IoT terminals, RFID terminals, NB-IOT terminals, MTC (Machine Type Communication) terminals, eMTC (enhanced MTC) terminals, data cards, network cards, vehicle-mounted communication devices, low-cost mobile phones, low-cost tablets, and other wireless communication devices. The base station or system device in the present application includes but is not limited to macro cellular base stations, micro cellular base stations, Femtocells, relay base stations, gNBs (NR Nodes B), TRPs (Transmitter Receiver Points), and other wireless communication devices.

The above descriptions are only preferred embodiments of the present application and are not used for limiting the scope of protection of the present application. Any modifications, equivalent replacements, improvements, and the like made within the spirit and principles of the present application should be comprised in the scope of protection of the present application.

## Claims

1. A first node for wireless communication, comprising:
a first transmitter, sending a first signal;
a first receiver, receiving a second signal; and determining a first timing advance,
wherein the first signal triggers the second signal; the second signal is an echo signal of the first signal; determination of the first timing advance depends on a first duration; and the first duration depends on a duration between a moment of sending the first signal and a moment of receiving the second signal.

2. The first node according to claim 1, wherein the determination of the first timing advance depends on a second duration; and the second duration depends on a first uplink parameter and a first downlink parameter.

3. The first node according to claim 1 or 2, wherein the determination of the first timing advance depends on a third duration, and the third duration depends on a third node; and the third duration is preconfigured or the third duration is default.

4. The first node according to any one of claims 1 to 3, comprising:
the first receiver, receiving a first RRC message, the first RRC message comprising a fourth duration,
wherein the determination of the first timing advance depends on the fourth duration.

5. The first node according to any one of claims 1 to 4, wherein the second signal comprises a plurality of physical signals, and the moment of receiving the second signal depends on moments of receiving the plurality of physical signals.

6. The first node according to any one of claims 1 to 5, comprising:
the first receiver, receiving first signaling, the first signaling comprising one Timing Advance Command field, and the one Timing Advance Command field in the first signaling indicating a second timing advance; and starting or restarting a first timer in response to the first signaling being received,
wherein the behavior of sending the first signal depends on the first timer expiring.

7. The first node according to claim 6, comprising:
the first receiver, starting or restarting the first timer in response to the second signal being received.

8. A second node for wireless communication, comprising:
a second receiver, receiving a first signal; and
a second transmitter, sending a second signal,
wherein the first signal triggers the second signal; the second signal is an echo signal of the first signal; determination of the first timing advance depends on a first duration; and the first duration depends on a duration between a moment of sending the first signal and a moment of receiving the second signal.

9. A method used in a first node for wireless communication, comprising:
sending a first signal;
receiving a second signal; and determining a first timing advance,
wherein the first signal triggers the second signal; the second signal is an echo signal of the first signal; determination of the first timing advance depends on a first duration; and the first duration depends on a duration between a moment of sending the first signal and a moment of receiving the second signal.

10. A method used in a second node for wireless communication, comprising:
receiving a first signal; and
sending a second signal,
wherein the first signal triggers the second signal; the second signal is an echo signal of the first signal; determination of the first timing advance depends on a first duration; and the first duration depends on a duration between a moment of sending the first signal and a moment of receiving the second signal.
